# NEUE EUROPÄISCHE PATENTSCHRIFT

(11) **EP 1 486 716 B2**
(45) Veröffentlichungstag und Bekanntmachung des Hinweises auf die Entscheidung über den Einspruch: **23.11.2011**
(45) Hinweis auf die Patenterteilung: 11.07.2007
(21) Anmeldenummer: 04011439.9
(22) Anmeldetag: 13.05.2004
(51) Int. Cl.: F16L 27/08, F16L 33/24, E03C 1/02

(54) **Sanitärschlauch mit drehbarer Kupplung für ein Anschlussstück**
Sanitary hose with rotatable coupling for a fitting
Tuyau souple sanitaire avec accouplement tournant pour un raccord

(30) Priorität: 11.06.2003 DE 10326300
(43) Veröffentlichungstag der Anmeldung: 15.12.2004
(73) Patentinhaber: OLDOPLAST KUNSTSTOFFPROFILE GMBH & CO. KG, 45772 Marl (DE)
(72) Erfinder: Börgel, Helmut, 45772 Marl (DE)
(74) Vertreter: Bockhorni & Kollegen

(56) Entgegenhaltungen:
- EP-A- 0 728 978
- DE-A1- 3 309 936
- DE-U- 29 506 835

## Beschreibung

Die Erfindung bezieht sich auf einen Sanitärschlauch mit drehbarer Kupplung für ein Anschlussstück mit den Merkmalen des Oberbegriffs des Patentanspruchs 1. Ein solcher Sanitärschlauch ist aus dem Gebrauchsmuster DE 295 06 835 U1 bekannt.

Sanitärschläuche mit drehbarer Anschlusskupplung werden vor allem in Bädern verwendet, wobei die Kupplung vorzugsweise zum drehbaren Anschließen einer Handbrause dient. Die drehbare Befestigung der Handbrause am Sanitärschlauch erleichtert deren Handhabung erheblich, weil diese Schläuche im wesentlichen torsionsfest sind und die Handbrause sich bei einer festen Verschraubung mit dem Schlauchende praktisch nicht drehen ließe, bzw. der Schlauch beim Drehen der Handbrause in sich verdrillt würde.

Das europäische Patent EP 728 978 B1 beschreibt einen einschlägigen Sanitärschlauch, dessen drehbare Anschlusskupplung eine einzige äußere Überwurfmutter umfasst. Eine an das Ende des Schlauches (nach dem Aufziehen der Überwurfmutter) angespritzte Hülse bildet eine Ringschulter, gegen die sich die Überwurfmutter axial und verdrehbar abstützt.

Die Überwurfmutter hat im Anschluss an ihr Innengewinde einen hohlzylindrischen Abschnitt (Innenzylinder). Zum Abdichten dieser Kupplung ist zunächst ein erster Dichtring zwischen der schlauchfesten Hülse und dem Innenzylinder vorgesehen. Zum axialen Festlegen der Überwurfmutter am Schlauchende ist ferner ein kurzes Innenrohr vorgesehen, das in axialer Flucht mit der Hülse liegt. Das Innenrohr hat einen mit einem Außengewinde versehenen Kragenabschnitt und einen sich daran anschließenden glatt zylindrischen Abschnitt mit kleinerem Durchmesser. Darin ist eine Nut zum Einlegen eines zweiten Dichtrings eingearbeitet.

Das Außengewinde des Innenrohrs wird mit dem Innengewinde der Überwurfmutter verschraubt. Es kann - infolge geeigneter Bemessung der Länge des Muttergewindes - nur so weit eingeschraubt werden, dass die Überwurfmutter nicht mit der schlauchfesten Hülse verspannt wird, sie also ein geringes axiales Spiel behält. Zugleich gelangt der zweite Dichtring in Anlage an die Wand des Innenzylinders der Überwurfmutter, so dass auch die Fuge zwischen dem Innenrohr und der Überwurfmutter abgedichtet ist. Es ist hingegen keine direkte Abdichtung zwischen dem Innenrohr und der Hülse vorgesehen.

Wenn auch die beiden Dichtringe der bekannten Kupplung unter sich gleich sind, so müssen sie auf zwei verschiedene Stücke, ggf. auch an unterschiedlichen Montagestationen, montiert werden, wobei dies im Falle der angespritzten Hülse erst nach dem Erstarren des Kunststoffmaterials möglich und nicht ohne Beschädigungsrisiko ist.

Vor dem Einschrauben eines Anschlussstückes in die Überwurfmutter wird wie üblich noch ein Dichtring zwischen die Stirnflächen des Anschlussstückes und des Innenrohres eingelegt. Das Gebrauchsmuster DE 295 06 835 U1 zeigt ein weiteres Anschlussstück für einen Kunststoffschlauch einer Badezimmer-Handbrause. Das Anschlussstück umfasst einen Nippel, der mit einem Ende des Kunststoffschlauchs durch z.B. Anspritzen verbunden ist. Der Nippel weist einen Kopf mit einem verringerten Durchmesser auf. Dieser Kopf des Nippels wird von einem Gleitring aufgenommen, weswegen der Gleitring einen Teil des Nippels von außen umfasst. In einer Ausführungsform ist der Gleitring durch eine in den Nippel eintauchende Metallhülse gebildet, die wiederum durch einen aufgesetzten Ring festgelegt ist,

Der Erfindung liegt die Aufgabe zu Grunde, einen Sanitärschlauch nebst Kupplung der eingangs genannten Art noch weiter zu verbessern.

Diese Aufgabe wird erfindungsgemäß mit den Merkmalen des Patentanspruchs 1 gelöst. Die Merkmale der Unteransprüche geben vorteilhafte Weiterbildungen der Erfindung an. Erfindungsgemäß wird ein Sanitärschlauch mit einem Innenschlauch und einem koaxialen Schlauchmantel und mit drehbarer Kupplung für ein Anschlussstück zur Verfügung gestellt, bei der eine zu einem Außengewinde des Anschlussstückes passende Überwurfmutter zum Verspannen des Anschlussstückes mit einem Außenflansch eines Innenrohres vorgesehen ist. Das Innenrohr ist dabei im Kupplungsbereich radial und gegen den Schlauch verdrehbar abgedichtet. Die Überwurfmutter ist axial und gegen den Schlauch verdrehbar gegen eine am Ende des Schlauches druckdicht befestigte, koaxial zum Innenrohr liegende Hülse abgestützt, wobei das Innenrohr direkt gegenüber der schlauchfesten Hülse abgedichtet ist, deren Innendurchmesser dem Innendurchmesser des Innenschlauches entspricht, die mit einem ringförmigen Vorsprung als Widerlager für die Überwurfmutter und als Aufnahme für das Innenrohr ausgebildet ist. Das Innenrohr weist erfindungsgemäß einen zylindrischen Abschnitt auf, der in einen hohlzylindrischen Abschnitt der Hülse eingreift, wobei die Fuge zwischen Innenrohr und Hülse mittels wenigstens einer Radialdichtung abgedichtet ist.

Im Bereich dieser axialen Überdeckung ist mindestens ein radialer Dichtring vorzusehen. Dieser wird ganz bevorzugt auf dem (metallischen) Innenrohr angeordnet, so dass dieses in der Montagelinie mit Dichtring(en), z. B. den üblichen O-Ringen, vorgerüstet vorgehalten werden kann. Es ist nicht mehr notwendig, auch die Hülse mit einem eigenen Dichtring auszustatten.

Mit zwei parallel nebeneinander liegenden Dichtringen wird die Dichtwirkung gesichert, und sie können eine Stützkraft gegen Kippeln des Innenrohrs gegenüber der Hülse aufbringen.

In allen Varianten dieser erfindungsgemäßen Anordnung können die lichten Innendurchmesser der Hülse und des Innenrohres beide so gestaltet werden können, dass sich im Kupplungsbereich keine Durchmesserverengung gegenüber dem Innendurchmesser des Sanitärschlauches ergibt (der z. B. 11 mm beträgt). Insgesamt kann die Kupplung mit einer schlanken, glattwandigen, leicht konischen Überwurfmutter versehen werden, die sich nicht wesentlich über den Außenumfang des Schlauchs erhebt.

Im konstruktiven Detail wird die Hülse nach einer bevorzugten Lösung in ihrem vom Schlauch weg weisenden Endbereich einen größeren lichten Innendurchmesser haben als der Schlauch. In diesen Abschnitt kann das (relativ dünnwandige) Innenrohr nebst Dichtring(en) eingeführt werden.

Man könnte natürlich die Dichtringe auch an der Hülse vormontieren, hinsichtlich der Logistik mit gleichem Vorteil der Montage auf nur ein Teil. In jedem Fall kann das Innenrohr zwanglos mit der Hülse zusammengesteckt werden. Dies ist wichtig, um die leichte Verdrehbarkeit der montierten Kupplung sicher zu stellen.

Anders als beim einschlägigen Stand der Technik ist keine separate Dichtung gegen die Überwurfmutter mehr notwendig. Durch die einhergehende Reduzierung der Durchmesser der radialen Dichtringe ist ferner davon auszugehen, dass zum Einleiten einer Drehbewegung verringerte Losbrechmomente benötigt werden, was das Verdrehen des Anschlussstückes gegenüber dem Schlauch weiter erleichtert.

Erfindungsgemäß wird das Innenrohr mit einem Kragenabschnitt mit Außengewinde versehen, das zu einem Innengewinde der Überwurfmutter passt. Nach dem Verschrauben beider Teile ist die Überwurfmutter auf dem Schlauchende in beide Richtungen festgelegt, da sie sich zum Schlauch hin indirekt über das Innenrohr auf der Hülse abstützt, und in der Richtung vom Schlauch weg von der in bekannter Weise eine Ringschulter bildenden schlauchfesten Hülse blockiert ist.

Durch gezieltes Dimensionieren der Länge des Innengewindes der Überwurfmutter lässt sich - in an sich bekannter Weise - eine definierte Einschraubtiefe für das Innenrohr so vorgeben, dass dieses mit der Überwurfmutter fest verschraubt werden kann, ohne dadurch die Verdrehbarkeit beider Kupplungsteile zu blockieren.

Weitere Einzelheiten und Vorteile des Gegenstands der Erfindung gehen aus der Zeichnung und deren sich im Folgenden anschließender eingehender Beschreibung hervor.

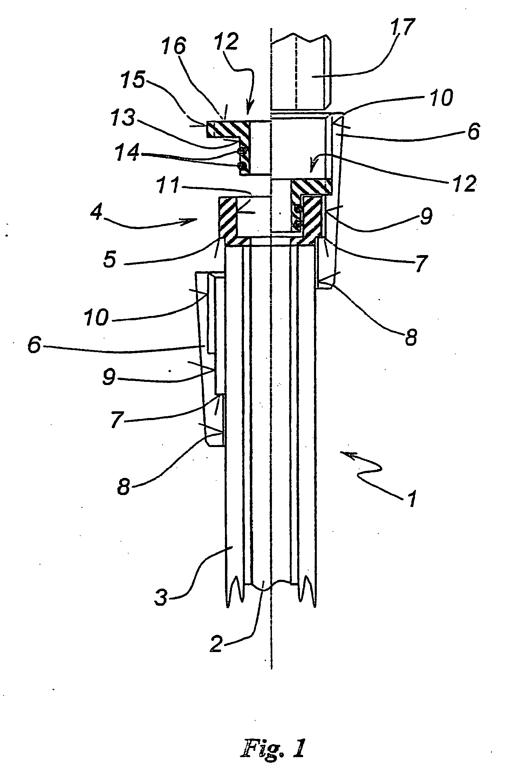

Es zeigt in vereinfachter, nicht maßstäblicher Darstellung
- Fig. 1: einen Längsschnitt durch ein Schlauchende mit einer daran angebrachten Kupplung, wobei rechts und links der vertikalen Symmetrieachse zwei unterschiedliche Montagestadien der Kupplung gezeigt sind.

In **Fig. 1** sind zwei aufeinander folgende Montagestadien einer Kupplung für einen Sanitärschlauch 1 im Längsschnitt dargestellt. Die Bildhälfte links der vertikalen Symmetrieachse zeigt in der Art einer Explosionszeichnung ein Zwischenstadium der Montage, während die rechte Bildhälfte die fertig am Schlauchende montierte drehbare Kupplung abbildet.

Ein Sanitärschlauch 1 hat einen Innenschlauch 2 aus flexiblem Material, vorzugsweise Kunststoff, und einen dazu koaxialen Schlauchmantel 3. Am freien Ende des Schlauches 1 ist eine Hülse 4 befestigt, vorzugsweise in an sich bekannter Weise durch Anspritzen eines geeigneten kompatiblen Kunststoffmaterials (z. B. Hart-PVC einer Shore-Härte von etwa 95), so dass sie dauerhaft und druckdicht mit dem Innenschlauch 2 verbunden ist. Die bevorzugte Art der Herstellung dieser Hülse ist im eingangs genannten Stand der Technik näher beschrieben, so dass hier nicht näher darauf einzugehen ist.

Die Hülse 4 bildet gegenüber dem Außendurchmesser des Schlauchmantels 3 einen ringförmigen Vorsprung 5. Dieser bildet ein Widerlager für eine Überwurfmutter 6. Letztere hat ihrerseits eine Innenschulter 7, die zur Anlage gegen den Vorsprung 5 der Hülse 4 kommt (rechte Bildhälfte). Wenn die Hülse 4 angespritzt wird, wird man die Überwurfmutter vom anderen Schlauchende her zuführen oder schon vor dem Anbringen der Hülse 4 auf den Schlauchmantel 3 aufziehen.

Im Anschluss an die Innenschulter 7 erstreckt sich zum Schlauch 1 hin (in der Zeichnung nach unten) ein zylindrischer Halsabschnitt 8 der Überwurfmutter 6. Er liegt mit geringem radialem Spiel nahezu an der Außenwand des Schlauchmantels 3 an. Im Endmontagezustand schützt der Halsabschnitt 8 den von ihm umfassten Bereich des Schlauchs 1 gegen Abknicken. Auch schützt er die schlauchfeste Hülse 4 gegen übermäßige Biegebelastungen

Im Bedarfsfall kann die Hülse 4 im Bereich ihres Übergangs vom Schlauchmantel 3 durch einer dünnwandige aufgeschobene Metallhülse (hier nicht gezeigt) geschützt werden, wie es das eingangs genannte europäische Patent bereits beschreibt. Diese kann ferner ggf. eine Gleitfläche für die Innenschulter 7 der Überwurfmutter bilden.

An die Innenschulter 7 der Überwurfmutter 6 schließt sich zum Schlauchende hin (in der Zeichnung nach oben) ein hohlzylindrischer, im folgenden als Innenzylinder 9 bezeichneter Abschnitt der Überwurfmutter 6 an, dessen Innendurchmesser größer als der Innendurchmesser des Halsabschnittes 8 ist. Auf ihn folgt ein Innengewinde-Abschnitt 10 der Überwurfmutter 6 bis zu deren vom Schlauch 1 abgewandten Ende. Der lichte Innendurchmesser im Bereich des Gewindes entspricht dem des Innenzylinders 9.

Der schlauchnahe kleinste lichte Innendurchmesser der Hülse 4 entspricht dem Innendurchmesser des Innenschlauchs 2. Daran schließt sich ein schlauchferner Längsabschnitt 11 der Hülse 4 mit vergrößertem Innendurchmesser an.

Ein Innenrohr 12 hat einen zylindrischen Abschnitt 13, auf den zwei Radial-Dichtringe 14 aufgezogen sind (vorzugsweise in Nuten eingelegt). Der Abschnitt 13 ist nebst Dichtringen in den Längsabschnitt 11 der Hülse 4 zwanglos einschiebbar (vgl. rechte Bildhälfte) und wird darin verdrehbar aufgenommen. Der lichte Innendurchmesser des Innenrohres 12 entspricht ebenfalls dem Innendurchmesser des Innenschlauchs 2, so dass der Strömungsquerschnitt in diesem Kupplungsbereich praktisch konstant ist.

Das Innenrohr 12 hat außerdem einen Kragenabschnitt 15 mit Außengewinde, dessen Außendurchmesser gegenüber dem zylindrischen Abschnitt 13 vergrößert ist. Dieses Außengewinde ist mit dem Innengewinde-Abschnitt der Überwurfmutter 6 verschraubbar, wie ebenfalls in der rechten Bildhälfte besser erkennbar ist.

Eine vom Schlauch 1 abgewandte Stirnfläche 16 des Innenrohrs 12 dient als Anschlussflansch zum Aufspannen eines nur in der rechten Bildhälfte angedeuteten Anschlussstückes 17, das mit einem ebenfalls zum Innengewinde 10 der Überwurfmutter 6 passenden Außengewinde versehen ist. Der Innenzylinder 9 der Überwurfmutter 6 zwischen der Innenschulter 7 und dem inneren Ende des Innengewindes 10 ist geringfügig länger als der Längsabschnitt der Hülse 4 zwischen deren Vorsprung 5 und ihrem schlauchfernen Stirnende.

In der rechten Bildhälfte erkennt man, dass nach dem Einsetzen des Innenrohrs 12 bzw. dessen zylindrischen Abschnittes 13 in die Hülse 4 (Längsabschnitt 11) und dem Einschrauben des Außengewinde-Abschnitts 13 bis zum inneren Ende des Innengewinde-Abschnitts 10 der Überwurfmutter 6 letztere axial in beide Richtungen an der Hülse 4 mit geringem axialem Spiel festgelegt ist.

Zwischen der schlauchfesten Hülse 4 und dem Schlauch 1 ist ohnehin kein Fluidaustritt möglich. Die Dichtringe 14 verhindern Fluidaustritt durch die Fuge zwischen dem Innenrohr 12 und der Hülse 4. Schließlich wird durch festes Einschrauben des Außengewindes des Anschlussstückes 17 in das Innengewinde der Überwurfmutter 6 eine dichte Verbindung des Sanitärschlauchs 1 mit dem Anschlussstück 17 hergestellt, wobei in der Regel ein weiterer, hier nicht gezeigter Axial-Dichtring zwischengelegt wird. An dieser Dichtfuge findet nur zum Anziehen und Lösen des Anschlussstückes 17 eine Relativdrehung statt, so dass hier eine Axialdichtung angemessen ist.

Das Anschlussstück 17 ist sodann infolge der freien Drehbarkeit des Innenrohrs 12 in der Hülse 4 und des axial spielbehafteten, klemmfreien Sitzes der Überwurfmutter 6 über der Hülse 4 frei gegenüber dem Schlauch 1 um beliebige Winkel drehbar.

## Patentansprüche

1. Sanitärschlauch (1) mit einem Innenschlauch (2) und einem koaxialen Schlauchmantel (3), mit drehbarer Kupplung für ein Anschlussstück (17) und mit einem Innenrohr (12), bei der eine zu einem Außengewinde des Anschlussstückes passende Überwurfmutter (6) zum Verspannen des Anschlussstückes (17) mit einem Außenflansch (16) des Innenrohres (12) vorgesehen ist, wobei das Innenrohr im Kupplungsbereich radial und gegen den Schlauch (1) verdrehbar abgedichtet ist und sich die Überwurfmutter (6) axial und gegen den Schlauch (1) verdrehbar gegen eine am Ende des Schlauches druckdicht befestigte, koaxial zum Innenrohr liegende Hülse (4) abstützt, wobei das Innenrohr (12) direkt gegenüber der schlauchfesten Hülse (4) abgedichtet ist, deren Innendurchmesser dem Innendurchmesser des Innenschlauches (2) entspricht, die mit einem ringförmigen Vorsprung (5) als Widerlager für die Überwurfmutter (6) und als Aufnahme für das Innenrohr (12) ausgebildet ist, **dadurch gekennzeichnet, dass** das Innenrohr (12) einen zylindrischen Abschnitt (13) aufweist, der in einen hohlzylindrischen Abschnitt (11) der Hülse (4) eingreift, wobei die Fuge zwischen Innenrohr (12) und Hülse (4) mittels wenigstens einer Radialdichtung (14) abgedichtet ist, wobei das Innenrohr (12) einen mit einem Außengewinde versehenen Kragenabschnitt (15) umfasst, der in ein Innengewinde (10) der Überwurfmutter (6) einschraubbar ist.

2. Schlauch nach Anspruch 1, **dadurch gekennzeichnet, dass** die mindestens eine Radialdichtung (14) entweder nur am Innenrohr (12) oder nur an der Hülse (4) angeordnet, insbesondere in einer Nut des betreffenden Bauteils axial festgelegt ist.

3. Schlauch nach einem der Ansprüche 1 oder 2, **dadurch gekennzeichnet, dass** zwei parallele Dichtringe (14) nebeneinander vorgesehen sind.

4. Schlauch nach einem der vorstehenden Ansprüche, **dadurch gekennzeichnet, dass** der lichte Innendurchmesser des Innenrohrs (12) mindestens gleich groß wie der lichte Innendurchmesser des Schlauchs (2) ist, insbesondere gleichen Durchmesser aufweist.

5. Schlauch nach einem der vorstehenden Ansprüche, **dadurch gekennzeichnet, dass** auf dem Schlauchende im Bereich der Hülse (4) eine dünnwandige Metallhülse mit einem auf der Unterseite eines Widerlagers (5) der Hülse (4) abstützbaren Flansch angeordnet ist, dessen Unterseite eine Gleitfläche für die Überwurfinutter bildet.

6. Schlauch nach einem der vorhergehenden Ansprüche, **dadurch gekennzeichnet, dass** die Hülse (4) aus Kunststoff gebildet und an das Schlauchende angespritzt ist.

7. Schlauch nach einem der vorhergehenden Ansprüche, **dadurch gekennzeichnet, dass** Innenrohr (12) und Hülse (4) zueinander verdrehbar sind.

8. Schlauch nach einem der vorhergehenden Ansprüche, **dadurch gekennzeichnet, dass** die Hülse (4) an dem stirnseitigen Ende des Schlauches ohne Übergriff mit dem Schlauchende befestigt ist.

9. Schlauch nach Anspruch 1, **dadurch gekennzeichnet, dass** das innere Ende des Innengewindes (10) der Überwurfmutter (6) als Begrenzung der Einschraubtiefe des Innenrohres (12) dient.

## Claims

1. Sanitary hose (1) with an inner hose (2) and a coaxial outer sheath (3), with a twistable coupling for a connecting piece (17) and with an inner tube (12), the said coupling comprising a sleeve nut (6) mating with a male thread of the connecting piece for tightening the connecting piece (17) against an outer flange (16) of the inner tube (12), the inner tube (12) being sealed radially and twistably with respect to the hose (1) in the coupling zone and the sleeve nut (6) bearing axially and twistably with respect to the hose (1) against a sleeve (4) located coaxially with the inner tube and bound to the hose end in a pressuretight manner, the inner tube (12) being sealed directly in relation to the hose-bound sleeve (4), the inner diameter of which corresponds to the inner diameter of the inner hose (2), and which is formed with an annular projection (5) serving as an abutment for the sleeve nut (6) and is designed as a seat for the inner tube (12), **characterized in that** the inner tube (12) has a cylindrical portion (13) which engages in a hollow cylindrical portion (11) of the sleeve (4), the joint gap between inner tube (12) and sleeve (4) being sealed by means of at least one radial seal (14), whereas the inner tube (12) comprises a collar portion (15) provided with a male thread which is screwable into a female thread (10) of the sleeve nut (6).

2. Hose according to Claim 1, **characterized in that** the at least one radial seal (14) is arranged either on the inner tube (12) only, or on the sleeve (4) only, and in particular is axially fixed in a groove in the relevant component.

3. Hose according to either of Claims 1 and 2, **characterized in that** two parallel sealing rings (14) are provided, side by side.

4. Hose according to any one of the preceding claims, **characterized in that** the inside bore of the inner tube (12) is at least as great as, and in particular is equal to, the inner diameter of the hose (2).

5. Hose according to any one of the preceding claims, **characterized in that** a thinwalled metal sleeve is arranged on the hose end in the region of the sleeve (4), with a flange which is able to bear on the underside of the abutment (5) of the sleeve (4) and the underside of which forms a sliding face for the sleeve nut.

6. Hose according to any one of the preceding claims, **characterized in that** the sleeve (4) is made of plastic material, and is injection-moulded on to the hose end.

7. Hose according to any one of the preceding claims, **characterized in that** inner tube (12) and sleeve (4) are twistable with respect to one another.

8. Hose according to any one of the preceding claims, **characterized in that** the sleeve (4) is attached to the end face of the hose, without overlapping the hose end.

9. Hose according to claim 1, **characterized in that** the inner end of the female thread (10) is serving as limit of the depth of insertion of the inner tube (12).

## Revendications

1. Tuyau flexible sanitaire (1) comprenant un tuyau interne (2) et une gaine de tuyau coaxiale (3), avec un raccord tournant pour un élément d'accouplement (17) et un tuyau interne (12), raccord dans lequel un écrou-chapeau (6) adapté à un filetage de l'élément d'accouplement est prévu pour serrer l'élément d'accouplement (17) avec une bride externe (16) du tuyau interne (12), dans lequel le tuyau interne (12), dans la zone d'accouplement, est rendu étanche radialement et de manière à pouvoir tourner par rapport au flexible (1) et l'écrou-chapeau (6) prend appui dans le sens axial et de manière à pouvoir tourner par rapport au flexible (1) sur une douille (4) fixée de manière étanche sur l'extrémité du flexible, située coaxialement par rapport au tuyau interne, le tuyau interne (12) étant directement étanche par rapport à la douille (4) fixée au flexible, dont le diamètre intérieur correspond au diamètre intérieur du tuyau interne (2), laquelle comprend une protubérance circulaire (5) qui sert de butée pour l'écrou-chapeau (6) et qui sert de logement pour le tuyau interne (12), **caractérisé en ce que**
le tuyau interne (12) présente une partie cylindrique (13) qui s'insère dans une partie en forme de cylindre creux (11) de la douille (4), la jointure entre le tuyau interne (12) et la douille (4) étant rendue étanche au moyen d'au moins un joint d'étanchéité radial (14), le tuyau interne 12) comprenant une partie de collerette (15) pourvue d'un filetage, qui peut être vissée dans un taraudage (10) de l'écrou-chapeau (6).

2. Tuyau flexible selon la revendication 1, **caractérisé en ce que** le au moins un joint d'étanchéité radial (14) est disposé uniquement sur le tuyau interne (12) ou uniquement sur la douille (4), en particulier fixé axialement dans une rainure de l'élément concerné.

3. Tuyau flexible selon l'une quelconque des revendications 1 ou 2, **caractérisé en ce que** deux bagues d'étanchéité parallèles (14) sont prévues côte à côte.

4. Tuyau flexible selon l'une quelconque des revendications précédentes, **caractérisé en ce que** le diamètre intérieur du tuyau interne (12) est au moins aussi grand que le diamètre intérieur du tuyau flexible (2), en particulier il présente le même diamètre.

5. Tuyau flexible selon l'une quelconque des revendications précédentes, **caractérisé en ce qu'**une douille métallique à paroi mince, comprenant une bride pouvant prendre appui sur la face inférieure de la butée (5) de la douille (4), est disposée sur l'extrémité du tuyau dans la zone de la douille (4), la face inférieure de la bride formant une surface de glissement pour l'écrou-chapeau.

6. Tuyau flexible selon l'une quelconque des revendications précédentes, **caractérisé en ce que** la douille (4) est faite de matière plastique et qu'elle est moulée par injection sur l'extrémité du tuyau.

7. Tuyau flexible selon l'une quelconque des revendications précédentes, **caractérisé en ce que** le tuyau interne (12) et la douille (4) peuvent tourner l'un par rapport à l'autre.

8. Tuyau flexible selon l'une quelconque des revendications précédentes, **caractérisé en ce que** la douille (4) est fixée sur l'extrémité frontale du tuyau flexible sans recouvrir l'extrémité du tuyau.

9. Tuyau flexible selon la revendication 1, **caractérisé en ce que** l'extrémité interne du taraudage (10) de l'écrou-chapeau (6) sert de limite de profondeur de vissage pour le tuyau interne (12).
